# EUROPEAN PATENT SPECIFICATION

(11) **EP 3 569 050 B1**
(45) Date of publication and mention of the grant of the patent: **31.03.2021**
(21) Application number: 19173101.7
(22) Date of filing: 07.05.2019
(51) Int. Cl.: A01D 41/14, A01D 41/127

(54) **METHOD AND SYSTEM FOR CONTROLLING THE HEIGHT OF AN AGRICULTURAL IMPLEMENT RELATIVE TO THE GROUND**
VERFAHREN UND SYSTEM ZUR STEUERUNG DER HÖHE EINES LANDWIRTSCHAFTLICHEN ARBEITSGERÄTS IN BEZUG AUF DEN BODEN
PROCÉDÉ ET SYSTÈME PERMETTANT DE CONTRÔLER LA HAUTEUR D'UN OUTIL AGRICOLE PAR RAPPORT AU SOL

(30) Priority: 07.05.2018 US 201815972695
(43) Date of publication of application: 20.11.2019
(73) Proprietor: CNH Industrial Belgium N.V., 8210 Zedelgem (BE)
(72) Inventor: Seiders, Jr., Kenneth, Elizabethtown, Pennsylvania 17022 (US)
(74) Representative: CNH Industrial IP Department

(56) References cited:
- EP-A1- 2 679 086
- EP-A1- 3 072 379
- EP-A1- 3 141 103
- US-A- 4 009 555
- US-A1- 2014 230 391

## Description

### FIELD OF THE INVENTION

The present subject matter relates generally to height control systems for agricultural implements, and, more particularly, to a method and system for a controlling the height of an agricultural implement relative to a ground surface.

### BACKGROUND OF THE INVENTION

A harvester is an agricultural machine that is used to harvest and process crops. For instance, a forage harvester may be used to cut and comminute silage crops, such as grass and corn. Similarly, a combine harvester may be used to harvest grain crops, such as wheat, oats, rye, barely, corn, soybeans, and flax or linseed. In general, the objective is to complete several processes, which traditionally were distinct, in one pass of the machine over a particular part of the field. In this regard, most harvesters are equipped with a detachable harvesting implement, such as a header, which cuts and collects the crop from the field and feeds it to the base harvester for further processing.

Conventionally, the operation of most harvesters requires substantial operational involvement and control by the operator. For example, with reference to a combine, the operator is typically required to control various operating parameters, such as the direction of the combine, the speed of the combine, the height of the combine header, the air flow through the combine cleaning fan, the amount of harvested crop stored on the combine, and/or the like. To address such issues, many current combines utilize an automatic header height and tilt control system to maintain a constant cutting height above the ground regardless of the ground contour or ground position relative to the base combine. For instance, it is known to utilize electronically controlled height and tilt cylinders to automatically adjust the height and lateral orientation, or tilt, of the header relative to the ground based on sensor measurements.

Some systems allow the operator to adjust the sensitivity of the system based on a desired responsiveness for the agricultural operation being performed. However, if a sensitivity setting is selected for performing the agricultural operation that is too high for slow speeds, the system may become unstable and/or unsafe when the speed of the work vehicle is reduced. This may occur, for instance, when the work vehicle is slowed to turn or at the end of the agricultural operation.

Accordingly, an improved method and related system for controlling the height of an agricultural implement relative to the ground that addresses one or more of the issues identified above would be welcomed in the technology.

EP 3 141 103 A1 describes a method and apparatus for automatically controlling a cut height of an agricultural harvester.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a method for automatically controlling a height of an implement of an agricultural work vehicle relative to a ground surface as disclosed in claim 1. The method includes monitoring, with one or more computing devices, each of the height of the implement relative to the ground surface and a vehicle speed of the work vehicle relative to the ground surface. The method includes determining, with the one or more computing devices, an implement height error by comparing the height of the implement with a predetermined target height. The method includes calculating, with the one or more computing devices, a sensitivity factor based on a sensitivity setting. When the monitored vehicle speed is greater than a predetermined speed threshold, the sensitivity factor may equal a first constant sensitivity value that is proportional to the sensitivity setting. The method includes reducing, with the one or more computing devices, the sensitivity factor to less than the first constant sensitivity value when the monitored vehicle speed becomes less than the predetermined speed threshold. The method includes adjusting, with the one or more computing devices, the height of the implement relative to the ground surface based on the implement height error and the sensitivity factor.

In another aspect, the present subject matter is directed to a height control system for an implement of an agricultural work vehicle. The control system includes an implement connected with the agricultural work vehicle and an implement height sensor configured to detect a height of the implement relative to a ground surface. The control system includes a controller communicatively coupled to the implement height sensor. The controller includes a processor and associated memory. The memory stores instructions that, when executed by the processor, configure the implement controller to perform operations. The operations include monitoring each of a vehicle speed of the work vehicle relative to the ground surface and a height of the implement relative to the ground surface based on signals received from the implement height sensor. The method may include determining an implement height error by comparing the height of the implement with a predetermined target height. The method may include calculating a sensitivity factor based on a sensitivity setting. When the monitored vehicle speed is greater than a predetermined speed threshold, the sensitivity factor may equal a first constant sensitivity value that is proportional to the sensitivity setting. The method may include reducing the sensitivity factor to less than the first constant sensitivity value when the monitored vehicle speed becomes less than the predetermined speed threshold. The method may include adjusting the height of the implement relative to the ground surface based on the implement height error and the sensitivity factor.

In a further aspect, the present subject matter is a method for automatically controlling a height of an implement of an agricultural work vehicle relative to a ground surface. The method may include monitoring, with one or more computing devices, each of the height of the implement relative to the ground surface and a vehicle speed of the work vehicle relative to the ground surface. The method may include determining, with the one or more computing devices, an implement height error by comparing a height of the implement with a predetermined target height. The method may include calculating, with the one or more computing devices, a sensitivity factor based on a sensitivity setting. The method may include adjusting, with the one or more computing devices, the height of the implement relative to the ground surface based on the implement height error and the sensitivity factor. When a speed of the vehicle is greater than or equal to a predetermined speed threshold, the sensitivity factor may be calculated using a first relationship between the sensitivity setting and the sensitivity factor. When the speed of the vehicle is less than the predetermined speed threshold, the sensitivity factor may be calculated using a second relationship between the sensitivity setting and the sensitivity factor such that the sensitivity factor is less than when the speed of the vehicle is greater than or equal to the predetermined speed threshold.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a simplified, partial sectional side view of one embodiment of an agricultural vehicle in accordance with aspects of the present subject matter;
FIG. 2 illustrates a simplified, schematic view of one embodiment of a hydraulic system for an agricultural harvester in accordance with aspects of the present subject matter;
FIG. 3 illustrates a schematic view of one embodiment of a system for controlling the height of an agricultural implement relative to the ground in accordance with aspects of the present subject matter;
FIG. 4 illustrates a flow diagram showing one embodiment of a method for controlling the height of an agricultural implement relative to the ground in accordance with aspects of the present subject matter;
FIGS. 5A and 5B illustrate example relationships between the sensitivity factor and vehicle speed in which a discontinuous function is applied to the sensitivity factor in accordance with aspects of the present subject matter;
FIGS. 6A through 6D illustrate example relationships between the sensitivity factor and vehicle speed according to additional embodiments of the present disclosure; and
FIG. 7 illustrates a set of example relationships between the sensitivity factor and vehicle speed according to another embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the claims.

In general, the present subject matter is directed to a control system for controlling the height of an implement associated with an agricultural vehicle. For example, a proportional-integral ("PI") or proportional-integral-derivative ("PID") control system may be used to monitor and control the height of the implement relative to a ground surface.

In one embodiment, the controller may adjust the height of the implement relative to the ground surface in a manner that provides a variable sensitivity or responsiveness. For example, a sensitivity factor may act as a gain for one or more of the signals (e.g., proportional, integral, or derivative) of the controller. The sensitivity may vary at least in part based on a speed of the vehicle with respect to the ground. For example, an operator of the work vehicle may input a desired sensitivity setting. The sensitivity setting may indicate the desired responsiveness for the system. For example, the operator may input a sensitivity setting based on the type of crop, height of the crop, and quality of the ground surface including how even or uneven the surface is. In some embodiments, the sensitivity setting may be associated with a specific vehicle speed setting (or vehicle speed setting range) that is suitable for performing an agricultural operation with the implement with respect to the ground surface. For example, the operator may select a sensitivity setting for harvesting at a typical harvesting speed, e.g., 4 miles per hour. However, when the operator reduces the speed of the work vehicle, for example to turn or stop, the selected sensitivity setting may result in the system being too sensitive for the reduced speed. This may undesirably result in system instability involving rapid adjustment of the implement height and/or overcorrections. Instead, the controller may be configured to reduce the sensitivity of the system in response to the work vehicle slowing down.

It may be undesirable for minor variations in the speed of the vehicle to affect the sensitivity of the system. Instead, the controller may reduce the sensitivity of the system when the speed of the work vehicle is reduced below a threshold speed. As an example, the threshold may be a lower limit that is suitable for the agricultural operation being performed.

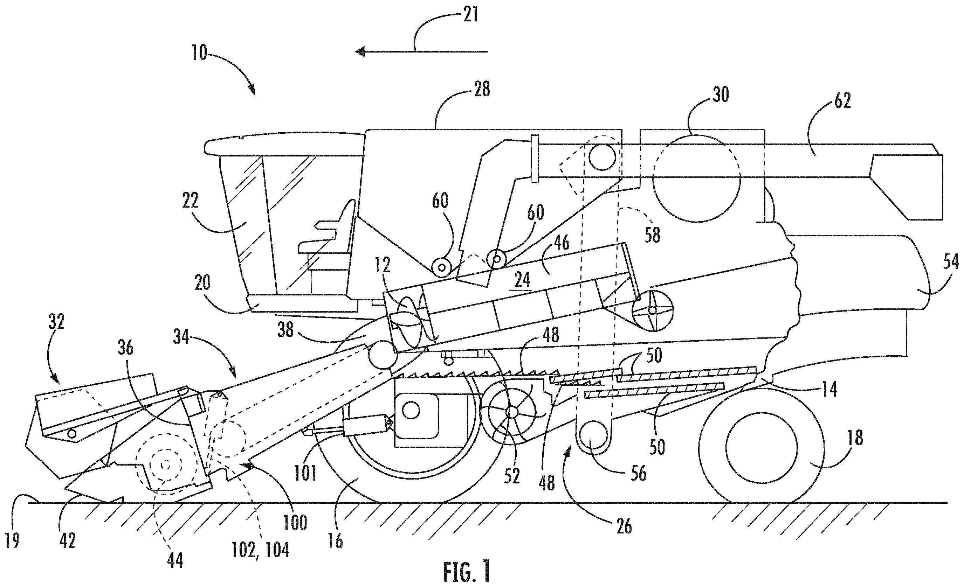

Referring now to the drawings, FIG. 1 illustrates a simplified, partial sectional side view of one embodiment of a work vehicle, such as a harvester 10. The harvester 10 may be configured as an axial-flow type combine, wherein crop material is threshed and separated while it is advanced by and along a longitudinally arranged rotor 12. The harvester 10 may include a chassis or main frame 14 having a pair of driven, ground-engaging front wheels 16 and a pair of steerable rear wheels 18. The wheels 16, 18 may be configured to support the harvester 10 relative to a ground surface 19 and move the harvester 10 in a forward direction of movement 21 relative to the ground surface 19. Additionally, an operator's platform 20 with an operator's cab 22, a threshing and separating assembly 24, a grain cleaning assembly 26 and a holding tank 28 may be supported by the frame 14. Additionally, as is generally understood, the harvester 10 may include an engine and a transmission mounted on the frame 14. The transmission may be operably coupled to the engine and may provide variably adjusted gear ratios for transferring engine power to the wheels 16, 18 via a drive axle assembly (or via axles if multiple drive axles are employed).

Moreover, as shown in FIG. 1, a harvesting implement (e.g., a header 32) and an associated feeder 34 may extend forward of the main frame 14 and may be pivotally secured thereto for generally vertical movement. In general, the feeder 34 may be configured to serve as support structure for the header 32. As shown in FIG. 1, the feeder 34 may extend between a front end 36 coupled to the header 32 and a rear end 38 positioned adjacent to the threshing and separating assembly 24. As is generally understood, the rear end 38 of the feeder 34 may be pivotally coupled to a portion of the harvester 10 to allow the front end 36 of the feeder 34 and, thus, the header 32 to be moved upwardly and downwardly relative to the ground 19 to set the desired harvesting or cutting height for the header 32.

As the harvester 10 is propelled forwardly over a field with standing crop, the crop material is severed from the stubble by a sickle bar 42 at the front of the header 32 and delivered by a header auger 44 to the front end 36 of the feeder 34, which supplies the cut crop to the threshing and separating assembly 24. As is generally understood, the threshing and separating assembly 24 may include a cylindrical chamber 46 in which the rotor 12 is rotated to thresh and separate the crop received therein. That is, the crop is rubbed and beaten between the rotor 12 and the inner surfaces of the chamber 46, whereby the grain, seed, or the like, is loosened and separated from the straw.

Crop material which has been separated by the threshing and separating assembly 24 falls onto a series of pans 48 and associated sieves 50, with the separated crop material being spread out via oscillation of the pans 48 and/or sieves 50 and eventually falling through apertures defined in the sieves 50. Additionally, a cleaning fan 52 may be positioned adjacent to one or more of the sieves 50 to provide an air flow through the sieves 50 that removes chaff and other impurities from the crop material. For instance, the fan 52 may blow the impurities off of the crop material for discharge from the harvester 10 through the outlet of a straw hood 54 positioned at the back end of the harvester 10.

The cleaned crop material passing through the sieves 50 may then fall into a trough of an auger 56, which may be configured to transfer the crop material to an elevator 58 for delivery to the associated holding tank 28. Additionally, a pair of tank augers 60 at the bottom of the holding tank 28 may be used to urge the cleaned crop material sideways to an unloading tube 62 for discharge from the harvester 10.

Moreover, in several embodiments, the harvester 10 may also include a hydraulic system 100 which is configured to adjust a height of the header 32 relative to the ground 19 so as to maintain the desired cutting height between the header 32 and the ground 19. The hydraulic system 100 may include a height control cylinder 101 configured to adjust the height of the header 32 relative to the ground. For example, in some embodiments, the height control cylinder 101 may be coupled between the feeder 34 and the frame 14 such that the height control cylinder 101 may pivot the feeder 34 to raise the header 32 relative to the ground 19. In some embodiments, hydraulic system 100 may also include first and second tilt cylinders 102, 104 coupled between the header 32 and the feeder 34 to allow the header 32 to be tilted relative to the ground 19 or pivoted laterally or side-to-side relative to the feeder 34.

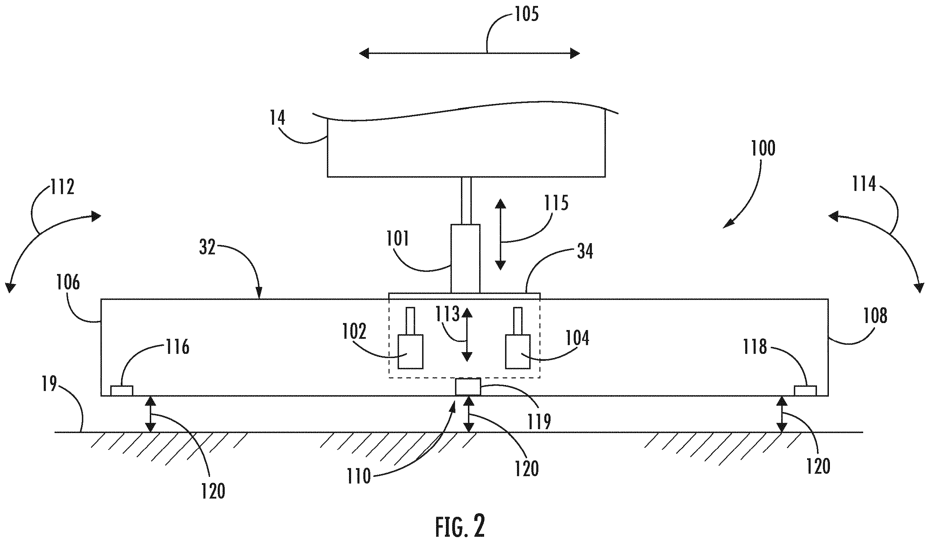

Referring now to FIG. 2, a simplified, schematic view of one embodiment of the hydraulic system 100 described above with reference to FIG. 1 is illustrated in accordance with aspects of the present subject matter. As shown, the header 32 may generally extend side-to-side or in a lengthwise direction (indicated by arrow 105 in FIG. 2) between a first lateral end 106 and a second lateral end 108. Additionally, the header 32 may be coupled to the feeder 34 at a location between its first and second lateral ends 106, 108 to allow the header 32 to tilt laterally relative to the feeder 34 (e.g., as indicated by arrows 112, 114 in FIG. 2). For example the header 32 may be coupled to the feeder 34 roughly at a center 110 of the header 32. The height control cylinder 101 may be configured to raise and lower the end of the feeder 34 relative to the frame 14 of the harvester (e.g., as indicated by arrow 115). The lateral tilt cylinders 102, 104 may be configured to laterally tilt the header 32 relative to the ground 19 (e.g., as indicated by arrows 112, 114). In some embodiments, the tilt cylinders 102, 104 may also be configured to raise and lower the header 32 with respect to the feeder 34 (e.g., as indicated by arrow 113).

As indicated above, the hydraulic system 100 may include the height control cylinder 101 and one or more tilt cylinders 102, 104. For instance, as shown in the illustrated embodiment, the first tilt cylinder 102 may be coupled between the header 32 and the feeder 34 along one lateral side of the connection between the header 32 and the feeder 34, and the second tilt cylinder 104 may be coupled between the header 32 and the feeder 34 along the opposed lateral side of the connection between the header 32 and the feeder 34. In general, the operation of the height control cylinder 101 and tilt cylinders 102, 104 may be controlled (e.g., via an associated controller) to adjust the height and angle of the header 32 relative to the ground 19. For instance, one or more height sensors 116, 118, 119 may be provided on the header 32 to monitor one or more respective local distances or heights 120 defined between the header 32 and the ground 19. Specifically, as shown in FIG. 2, a first height sensor 116 may be provided at or adjacent to the first lateral end 106 of the header 32, and a second height sensor 118 may be provided at or adjacent to the second lateral end 108 of the header 32. In some embodiments, a third height sensor 119 may be provided at or adjacent the center 110 of the header 32. In such an embodiment, when one of the height sensors 116, 118, 119 detects that the local height 120 defined between the header 32 and the ground 19 differs from a desired height (or falls outside a desired height range), the height control cylinder 101 and/or the tilt cylinders 102, 104 may be actively controlled so as to adjust the height and/or tilt of the header 33 in a manner that maintains the header 32 at the desired height (or within the desired height range) relative to the ground 19. In some embodiments, the desired height may be an average, weighted average, or other suitable mathematical combination of the local heights 120 measured by one or more of the height sensors 116, 118, 119.

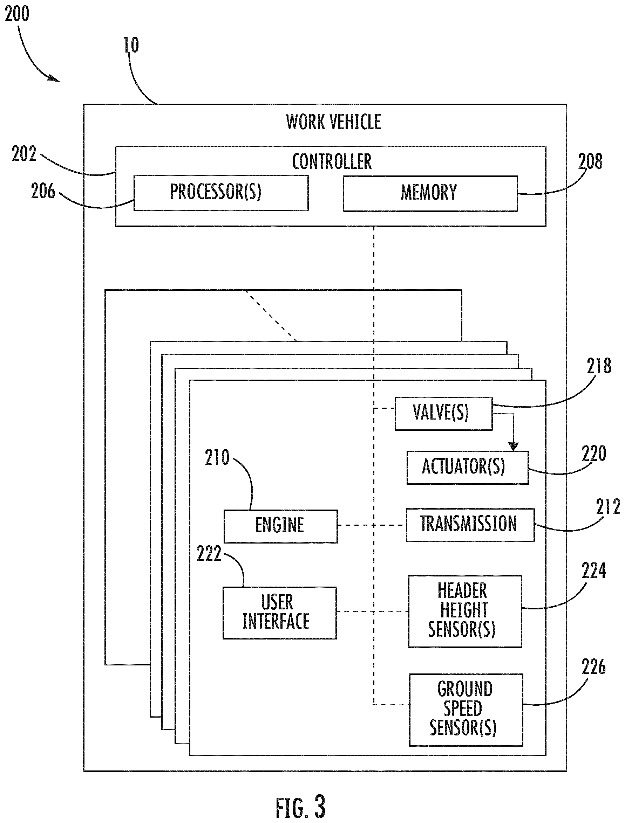

Referring now to FIG. 3, a schematic view of one embodiment of a control system 200 is provided for automatically controlling the height of an agricultural implement (such as the header 32 of the harvester 10 described above) relative to the ground 19 in accordance with aspects of the present subject matter. In general, the control system 200 will be described herein with reference to the harvester 10 and header 32 illustrated in FIGS. 1 and 2. However, it should be appreciated that the disclosed control system 200 may be implemented to control the height of any suitable agricultural implement associated with a work vehicle having any other suitable configuration.

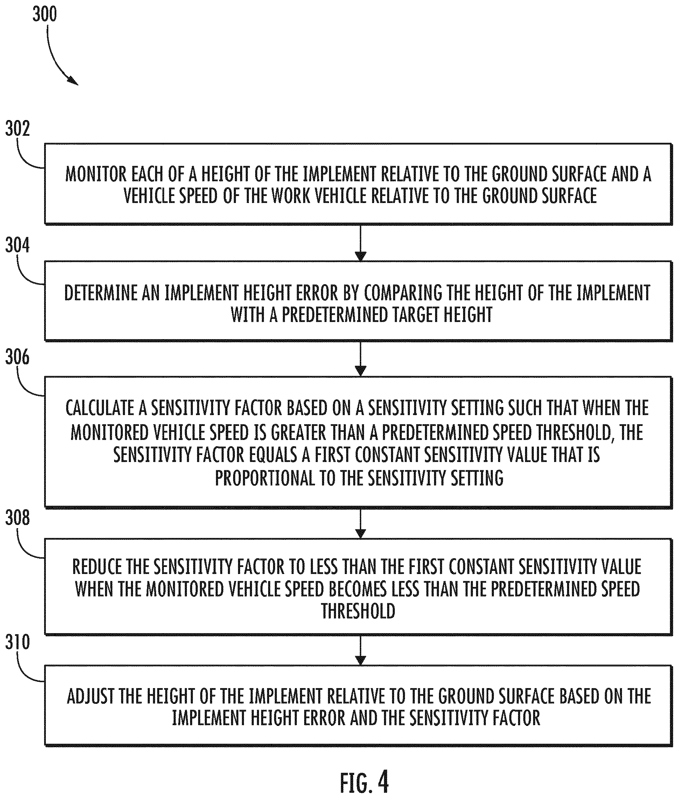

As shown, the control system 200 may generally include a controller 202 installed on and/or otherwise provided in operative association with the harvester 10. In general, the controller 202 of the disclosed system 200 may correspond to any suitable processor-based device(s), such as a computing device or any combination of computing devices. Thus, in several embodiments, the controller 202 may include one or more processor(s) 206 and associated memory device(s) 208 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 208 of the controller 202 may generally comprise memory element(s) including, but not limited to, computer readable medium (e.g., random access memory (RAM)), computer readable nonvolatile medium (e.g., a flash memory), a compact disc-read only memory (CD-ROM), a magneto-optical disk (MOD), a digital versatile disc (DVD) and/or other suitable memory elements. Such memory device(s) 208 may generally be configured to store suitable computer-readable instructions that, when implemented by the processor(s) 206, configure the controller 202 to perform various computer-implemented functions, such as one or more aspects of a method 300 for controlling the height of the implement described below with reference to FIG. 4.

In addition, the controller 202 may also include various other suitable components, such as a communications circuit or module, a network interface, one or more input/output channels, a data/control bus and/or the like, to allow the controller 202 to be communicatively coupled with any of the various other system components described herein. In some embodiments, the controller 202 may be configured to monitor and/or control an engine 210 and transmission 212 of the harvester 10.

Referring still to FIG. 3, the controller 202 may generally be configured to control the operation of one or more components of the harvester 10. For instance, in several embodiments, the controller 202 may be configured to control the operation of one or more components that regulate the height of the header 32 relative to the ground 19. For example, the controller 202 may be communicatively coupled to one or more control valve(s) 218 configured to regulate the supply of fluid (e.g., hydraulic fluid or air) to one or more corresponding actuator(s) 220. In some embodiments, the actuators 220 may correspond to the height control cylinder 101, first tilt cylinder 102, and/or second tilt cylinder 104 described above with reference to FIGS. 1 and 2, and the control valve(s) 218 may correspond to one or more valves associated with the cylinder(s) 101, 102, 104.

Moreover, as shown in the illustrated embodiment, the vehicle controller 202 may be communicatively coupled to a user interface 222 of the work vehicle 10. In general, the user interface 222 may correspond to any suitable input device(s) configured to allow the operator to provide operator inputs to the vehicle controller 202, such as a touch screen display, a keyboard, joystick, buttons, knobs, switches, and/or combinations thereof located within the cab 22 of the work vehicle 10. The operator may provide various inputs into the system 200 via the user interface 222. In one embodiment, suitable operator inputs may include, but are not limited to, a target height for the implement, a crop type and/or characteristic indicative of a suitable target header height, and/or any other parameter associated with controlling the height of the implement.

Additionally, controller 202 may also be communicatively coupled to the various sensors associated the header 32. For instance, as shown in FIG. 3, the planter controller 104 may be coupled to one or more header height sensor(s) 224 configured to monitor the height of the header 32 relative to the ground 19. In one embodiment, the header height sensor(s) 224 may correspond to one or more of the height sensors 116, 118, 119 described above with reference to FIG. 2 that are configured to monitor local distance(s) or height(s) 120 defined between the header 32 and the ground 19.

The controller 202 may also be communicatively coupled to one or more ground speed sensor(s) 226. The ground speed sensor(s) 226 may be configured to measure the rotational speed of the wheels of the work vehicle 10 or otherwise configured to measure a ground speed of the work vehicle 10 and/or header 32 using any suitable sensor type.

FIG. 4 illustrates a flow diagram of one embodiment of a method 300 for automatically controlling a height of an implement of an agricultural work vehicle relative to a ground surface in accordance with aspects of the present subject matter. Although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure. Moreover, the method 300 will generally be described herein with reference to the harvester 10 and header 32 shown in FIG. 1. However, it should be appreciated that the disclosed method 300 may be executed to control the height of any suitable agricultural implement associated with a work vehicle having any other suitable configuration.

Referring to FIG. 4, the method 300 may include, at (302), monitoring each of the height of the implement relative to the ground surface and a vehicle speed of the work vehicle relative to the ground surface. For example, the controller 202 may receive signals from the header height sensor(s) 224 (e.g., height sensors 116, 118, 119 configured to monitor local distance(s) or height(s) 120 defined between the header 32 and the ground 19). The controller 202 may be configured to receive signals from the height sensor and convert the signals into a height measurement or value. The controller 202 may also receive signals from the ground speed sensor(s) 226 and convert such signals to a speed measurement or value.

The method 300 may include, at (304), determining an implement height error by comparing the height of the implement with a predetermined target height. For example, the controller 202 may subtract the predetermined target height from the monitored height to determine the implement height error. Thus, when the monitored height exceeds the predetermined target height, the implement height error may be positive, and when the predetermined target height exceeds the monitored height, the implement height error may be negative.

In some embodiments, the predetermined target height may be based on the specific model of the header 32 and/or may be input by the operator through the user interface 222. For example, as indicated above, the operator may directly input a desired target height or may input crop information or characteristics, such as the type, condition, height, density, and/or the like of the crop, from which the controller may select an appropriate target height using the user interface 222.

The method 300 may include, at (306), calculating a sensitivity factor based on a sensitivity setting. The sensitivity setting may describe a desired responsiveness of the control system. The sensitivity setting may be received from an operator of the work vehicle. For example, the operator of the work vehicle may input the sensitivity setting via the user interface 222. The sensitivity setting may be associated with a vehicle speed setting that is suitable for performing an agricultural operation with the implement with respect to the ground surface. For example, the operator may select a sensitivity setting for harvesting at a typical harvesting speed, e.g., 4 miles per hour. The operator may select the sensitivity setting based on a number of factors, such as the type of crop to be harvested, height of the crop, and characteristics of the ground surface.

When the monitored vehicle speed is greater than a predetermined speed threshold, the sensitivity factor may equal a first constant sensitivity value that is proportional to the sensitivity setting. For example, the controller 202 may select the sensitivity factor such that the implement height is adjusted with the desired sensitivity or responsiveness that the operator intended. For example, the first constant sensitivity value may be calculated according to a sensitivity factor gain and sensitivity factor offset (e.g., using a linear relationship such as y = mx + b, where m is the gain, and b is the offset). In some embodiments, a saturation function may be applied that prevents the resulting sensitivity factor from being too low or too high for the vehicle speed, target implement height, and/or any other suitable operating parameters.

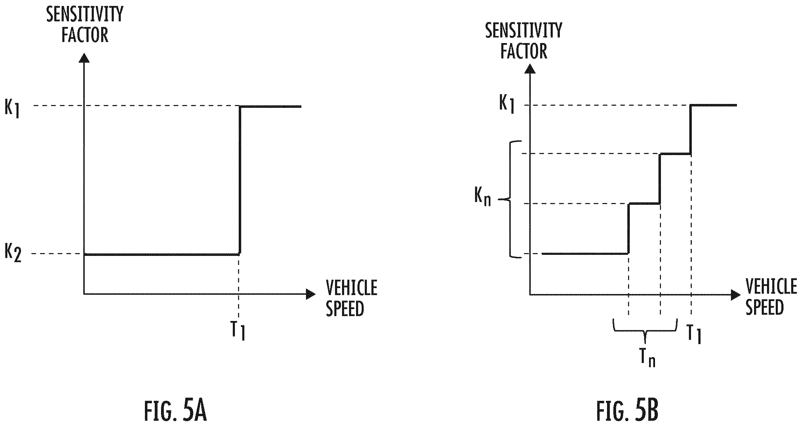

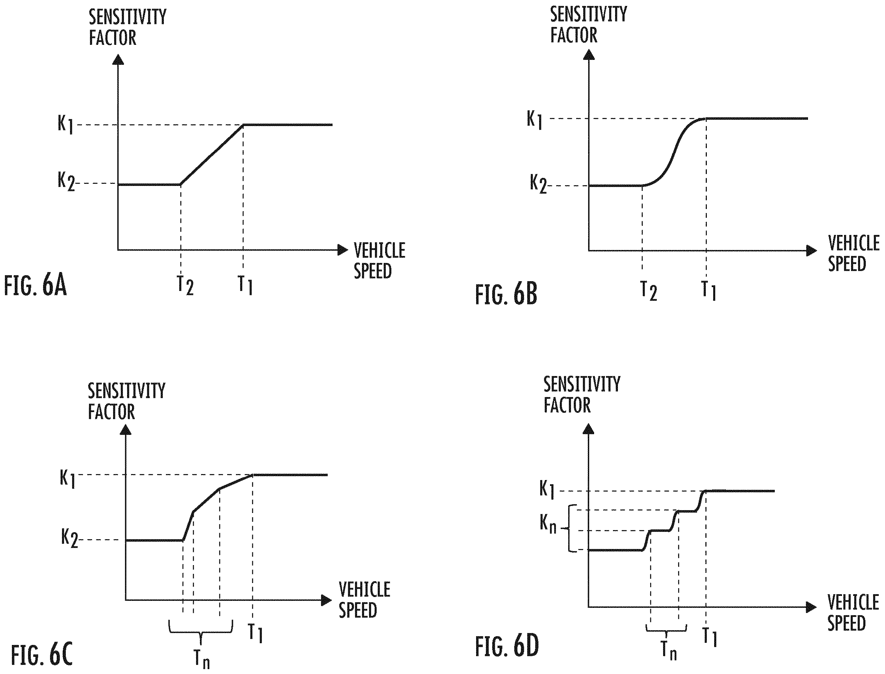

The method 300 may include, at (308), reducing the sensitivity factor to less than the first constant sensitivity value when the monitored vehicle speed becomes less than the predetermined speed threshold. For example, the operator may first set the desired sensitivity as described above, but then slow the vehicle, e.g., below a suitable speed for the performing the agricultural operation. Without adjustment, the sensitivity of the system may be too great at such a reduced speed. This could undesirably result in system instability, such as overcorrections. The controller 202 may reduce the sensitivity factor such that the sensitivity of the system is reduced, which may prevent system instability and/or overcorrections. The sensitivity factor may be calculated, at (306), and reduced, at (308), according to various embodiments of the present disclosure. Example relationships used to calculate and reduce the sensitivity factor are discussed below, for example with reference to FIGS. 5A, 5B, and 6A-6D.

The predetermined speed threshold may be selected based on the dynamic characteristics of the system, such as the weight of the implement, the size of the implement, the maximum safe rate at which the implement height may be adjusted, etc. The predetermined speed threshold may also vary depending on various characteristics of the harvester or implement and/or operating parameters of the agricultural operation. For example, these characteristics and parameters may include the type of agricultural operation being performed, the target implement height, the sensitivity setting that has been selected, the vehicle speed setting associated with the sensitivity setting, and/or any other suitable parameter.

The method 300 may include, at (310), adjusting the height of the implement relative to the ground surface based on the implement height error and the sensitivity factor. For example, the controller 202 may control the valve(s) 218 to regulate the supply of fluid (e.g., hydraulic fluid or air) to one or more corresponding actuator(s) 220. As discussed above, the actuators 220 may, in one embodiment, correspond to the height control cylinder 101, first tilt cylinder 102, and/or second tilt cylinder 104, and the control valve(s) 218 may correspond to one or more valves associated with the cylinder(s) 101, 102, 104. Although illustrated as a separate operation, it should be understood that the height of the implement may be adjusted during the previously described operations such that reducing the sensitivity factor alters the manner in which the height of the implement is adjusted.

In some embodiments, the controller may be configured as a modified PI or PID controller. The following equation shows the output signal, u(t), of a modified PID controller in accordance with aspects of the present disclosure, where e(t) represents the implement height error as a function of time, t; Kp, Ki, and Kd represent respective constant gains for each of the proportional, integral, and derivative signal components; and S represents the sensitivity factor:
(1) In this embodiment, the sensitivity factor is added to the proportional signal gain, represented by Kp. Thus, an increase in the sensitivity factor results in a larger proportional signal and a faster response from the system. In other embodiments, the sensitivity factor may be multiplied with the proportional signal gain.

In alternative embodiments, the sensitivity factor may be used to adjust the integral signal or the derivative signal. For example, the sensitivity factor may be added to or multiplied with the integral signal gain or derivative signal gain. In yet other embodiments, the sensitivity factor may be added to or multiplied with at least two of the proportional, integral, or derivative signal gains. In further embodiments, the sensitivity factor may be multiplied with the overall output signal of the system, u(t).

FIGS. 5A and 5B illustrate example relationships between the sensitivity factor and vehicle speed according to aspects of the present disclosure. For example, FIG. 5A illustrates an embodiment in which a discontinuous function may be applied such that the sensitivity factor equals a second constant sensitivity value when the monitored vehicle speed is less than the predetermined speed threshold.

The sensitivity factor may equal a first constant sensitivity value (represented by K1 in FIG. 5A) when the vehicle speed is greater than the predetermined speed threshold (represented by T1 in FIG. 5A). When the vehicle speed is reduced below the predetermined speed threshold, the sensitivity factor may equal a second constant sensitivity value (represented by K2 in FIG. 5A). This may result in the overall sensitivity of the system being reduced once the vehicle speed is reduced below the predetermined speed threshold.

FIG. 5B illustrates another example relationship between the sensitivity factor and vehicle speed according to another embodiment of the present disclosure. A discontinuous function may be applied such that the sensitivity factor is reduced in steps as the vehicle speed is reduced below a predetermined speed threshold (represented by T1 in FIG. 5B). Subsequent predetermined speed values (represented by Tn in FIG. 5B) may be defined that are less than the predetermined speed threshold. At each predetermined speed threshold, the sensitivity factor may be reduced to a respective constant sensitivity values (represented by Kn).

FIGS. 6A through 6D illustrate example relationships between the sensitivity factor and vehicle speed according to additional embodiments of the present disclosure. In some embodiments, the sensitivity factor may be based on the monitored vehicle speed such that the sensitivity factor varies with the monitored vehicle speed when the monitored vehicle speed is less than the predetermined speed threshold. For example, referring to FIG. 6A, the sensitivity factor may be linearly scaled between a first constant sensitivity value (represented by K1 in FIG. 6A) and a second constant sensitivity value (represented by K2 in FIG. 6A). The sensitivity factor may equal the first constant sensitivity value at the predetermined speed threshold (represented by T1 in FIG. 6A) and at any speeds above the threshold, and may equal the second constant sensitivity value at a second predetermined speed value (represented by T2 in FIG. 6A) and any speeds below such speed value. When compared with the discontinuous relations described with reference to FIG. 5A and 5B, this linear correlation may provide a smoother adjustment as the vehicle speed is reduced.

Referring to FIG. 6B, in some embodiments, the sensitivity factor may have a continuous and smooth (e.g., free of second order discontinuities) relationship with the vehicle speed. Referring to FIG. 6C, in some embodiments, the sensitivity factor may have a piecewise relationship with the vehicle speed. The piecewise relationship may be linear and continuous, for example. In other embodiments, however, the piecewise relationship may be non-linear and/or discontinuous. Referring to FIG. 6D, in some embodiments, the sensitivity factor may step down in a similar manner as described with reference to FIG. 5B. However, in this embodiment, the transition between the predetermined sensitivity values (represented by Kn in FIG. 6D) may be continuous and/or smooth.

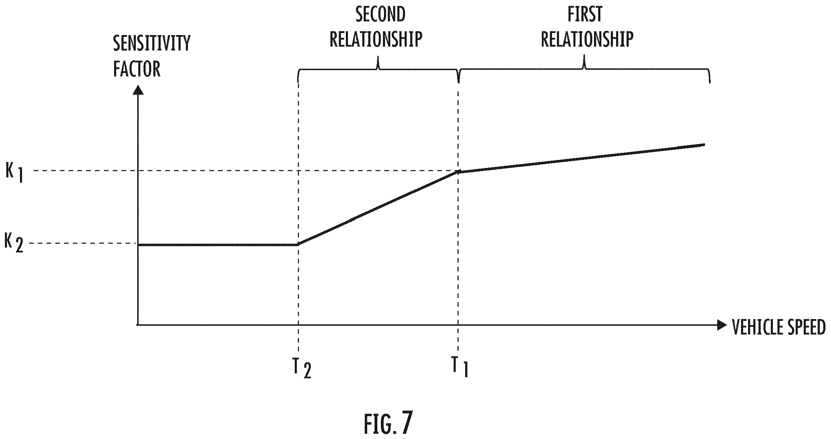

FIG. 7 illustrates a set of example relationships between the sensitivity factor and vehicle speed according to another embodiment of the present disclosure. In some embodiments, when the speed of the vehicle is greater than or equal to the predetermined speed threshold (represented by T1 in FIG. 7), the sensitivity factor may be calculated using a first relationship between the sensitivity setting and the sensitivity factor. When the speed of the vehicle is less than the predetermined speed threshold (represented by T1 in FIG. 7), the sensitivity factor may be calculated using a second relationship between the sensitivity setting and the sensitivity factor such that the sensitivity factor is less than when the speed of the vehicle is greater than or equal to the predetermined speed threshold.

The first and second relationships may be selected from a variety of suitable mathematical relationships. The first and second relationships may include linear, non-linear, continuous, and/or discontinuous types of mathematical relationships, for example as discussed with regards to FIGS. 5A, 5B, and 6A through 6D. As an example, one or both of the first and second relationships may be defined as linear relationships (e.g., using the form y = mx + b, where m represents a slope, and b represents an offset). The first relationship may have a slope that is less than the second relationship as illustrated in FIG. 7. In alternative embodiments, however, the first relationship may have a slope that is greater than the second relationship.

In some embodiments, the operator may input a sensitivity setting, such as a "baseline" sensitivity setting, that is associated with a vehicle speed that is less than a second predetermined speed threshold (represented by T2 in FIG. 7). The sensitivity factor may be calculated based on the baseline sensitivity setting. When the speed of the vehicle is increased above the second predetermined speed threshold (represented by T2 in FIG. 7), the sensitivity factor may increase from the baseline sensitivity setting according to the second relationship. When the vehicle speed exceeds the predetermined speed threshold (represented by T1 in FIG. 7), the sensitivity setting may be increased according to the first relationship. It should also be understood that, in some embodiments, the sensitivity setting may be associated with a vehicle speed that is greater than the second predetermined speed threshold (represented by T2 in FIG. 7) and less than the predetermined speed threshold (represented by T1 in FIG. 7). In other embodiments, the sensitivity setting may be associated with a vehicle speed that is greater than the predetermined speed threshold (represented by T1 in FIG. 7). In any case, in some embodiments, the method may include increasing and/or decreasing the sensitivity factor according to the first relationship, the second relationship, and/or various other aspects of the present disclosure.

In a similar manner, additional relationships between the sensitivity factor and vehicle speed may be defined having respective predefined speed values. Such additional relationships may be defined for respective speed values that are greater than the predetermined speed threshold and/or less than the predetermined speed threshold. For example, in one embodiment, the sensitivity factor may be reduced according to a third relationship with the speed of the work vehicle when the speed of the work vehicle is greater than a third predefined speed value. The third predefined speed value may be greater than the predetermined speed threshold (represented by T1 in FIG. 7). For example, this may provide a reduction of the sensitivity factor when the work vehicle is traveling at a speed that is too fast to safely or properly perform the agricultural operation. In such a situation, the controller may also be configured to alert the operator and or raise the implement to avoid damage to the implement and/or harvester.

In some embodiments, additional functions and/or features may be employed that reduce or prevent sudden changes in the system response as a result of the sensitivity factor being reduced or adjusted. For example, a hysteresis function may be applied to the sensitivity factor. In one embodiment, the hysteresis function may include a switch point and reset point with respect to the predetermined speed threshold. For instance, a switch point may be defined as the predetermined speed threshold, and the reset point may be defined as the predetermined speed threshold plus a hysteresis threshold. The hysteresis function may cause the sensitivity factor to be reduced to less than the first constant sensitivity value when the monitored vehicle speed becomes less than the switch point (e.g., predetermined speed threshold). However, the sensitivity factor may return to the first constant sensitivity value only when the monitored vehicle speed subsequently becomes greater than the reset point (e.g., predetermined speed threshold plus a hysteresis threshold). Thus, the hysteresis function may prevent or reduce rapid fluctuation of the sensitivity factor as a result of minor changes in the monitored vehicle speed. This may increase the stability and/or improve the performance of the system.

In some embodiments, a delay function may be applied such that the sensitivity factor is reduced only when the monitored vehicle speed remains less than the predetermined speed threshold for at least a predetermined time interval. Thus, if the monitored vehicle speed is reduced below the predetermined speed threshold for a time period that is less than the predetermined time interval, the sensitivity factor may remain equal to the first constant sensitivity value.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method (300) for automatically controlling a height (120) of an implement (32) of an agricultural work vehicle (10) relative to a ground surface (19), the method (300) including monitoring, with one or more computing devices, each of the height (120) of the implement (32) relative to the ground surface (19) and a vehicle speed of the work vehicle (10) relative to the ground surface (19), the method (300) further including determining, with the one or more computing devices, an implement height error by comparing the height (120) of the implement (32) with a predetermined target height, the method (300) being **characterized by**:
calculating, with the one or more computing devices, a sensitivity factor based on a sensitivity setting, and wherein, when the monitored vehicle speed is greater than a predetermined speed threshold, the sensitivity factor equals a first constant sensitivity value that is proportional to the sensitivity setting;
reducing, with the one or more computing devices, the sensitivity factor to less than the first constant sensitivity value when the monitored vehicle speed becomes less than the predetermined speed threshold; and
adjusting, with the one or more computing devices, the height (120) of the implement (32) relative to the ground surface (19) based on the implement height error and the sensitivity factor.

2. The method (300) as in claim 1, wherein reducing the sensitivity factor comprises scaling the sensitivity factor based on the monitored vehicle speed such that the sensitivity factor varies with the monitored vehicle speed when the monitored vehicle speed is less than the predetermined speed threshold.

3. The method (300) as in any preceding claim, wherein scaling the sensitivity factor based on the monitored vehicle speed comprises linearly scaling the sensitivity factor based on the monitored vehicle speed.

4. The method (300) as in any preceding claim, wherein reducing the sensitivity factor comprises applying a discontinuous function such that the sensitivity factor equals a second constant sensitivity value when the monitored vehicle speed is less than the predetermined speed threshold.

5. The method (300) as in any preceding claim, wherein reducing the sensitivity factor comprises applying a discontinuous function such that the sensitivity factor is reduced in steps as the monitored vehicle speed is reduced when the monitored vehicle speed is below the predetermined speed threshold.

6. The method (300) as in any preceding claim, further comprising at least one of:
computing a proportional signal based on a product of a proportional signal gain and the implement height error, the proportional signal gain being based on the sensitivity factor, and wherein adjusting the height (120) of the implement (32) relative to the ground surface (19) comprises adjusting the height (120) of the implement (32) based on the proportional signal; or
computing an integral signal based on an integral of the implement height error with respect to time, and wherein adjusting the height (120) of the implement (32) comprises adjusting the height (120) of the implement (32) further based on the integral signal.

7. The method (300) as in any preceding claim, further comprising receiving the sensitivity setting from an operator of the work vehicle (10).

8. The method (300) as in any preceding claim, wherein the sensitivity setting is associated with a vehicle speed setting that is suitable for performing an agricultural operation with the implement (32) with respect to the ground surface (19).

9. The method (300) as in any preceding claim, wherein adjusting the height (120) of the implement (32) includes controlling a valve (218) that is fluidly coupled with an actuator (220) configured to raise and lower the implement (32).

10. A height control system (200) for an implement (32) of an agricultural work vehicle (10), the control system (200) including an implement (32) connected with the agricultural work vehicle (10), and an implement height sensor (224) configured to detect a height (120) of the implement (32) relative to a ground surface (19), the control system (200) further including a controller (202) communicatively coupled to the implement height sensor (224), the controller (202) including a processor (206) and associated memory (208), the memory (208) storing instructions that, when executed by the processor (206), configure the implement controller (202) to monitor each of a vehicle speed of the work vehicle (10) relative to the ground surface (19) and a height (120) of the implement (32) relative to the ground surface (19) based on signals received from the implement height sensor (224) and determine an implement height error by comparing the height (120) of the implement (32) with a predetermined target height, the control system (200) being **characterized by**:
the controller (202) being configured to:
calculate a sensitivity factor based on a sensitivity setting, and wherein, when the monitored vehicle speed is greater than a predetermined speed threshold, the sensitivity factor equals a first constant sensitivity value that is proportional to the sensitivity setting;
reduce the sensitivity factor to less than the first constant sensitivity value when the monitored vehicle speed becomes less than the predetermined speed threshold; and
adjust the height (120) of the implement (32) relative to the ground surface (19) based on the implement height error and the sensitivity factor.

11. The height control system (200) as in claim 10, wherein the controller (202) is further configured to scale the sensitivity factor based on the monitored vehicle speed such that the sensitivity factor varies with the monitored vehicle speed when the monitored vehicle speed is less than the predetermined speed threshold.

12. The height control system (200) as in any of claims 10 or 11, wherein the controller (202) is further configured to apply a discontinuous function such that the sensitivity factor equals a second constant sensitivity value when the monitored vehicle speed is less than the predetermined speed threshold.

13. The height control system (200) as in any of claims 10 through 12, wherein the controller (202) is further configured to apply a discontinuous function such that the sensitivity factor is reduced in steps including subsequent decreasing predetermined sensitivities values as the monitored vehicle speed is reduced when the monitored vehicle speed is below the predetermined speed threshold.

14. The height control system (200) as in any of claims 10 through 13, further comprising an operator interface (222), and wherein the controller (202) is further configured to receive the sensitivity setting from an operator of the work vehicle (10) via the operator interface (222).

15. The height control system (200) as in any of claims 10 through 14, further comprising an actuator (220) configured to raise and lower the implement (32) relative to the ground surface (19) and a control valve (218) fluidly coupled with the actuator (220), and wherein the controller (202) is configured to control the flow of a fluid to the actuator (220) using the control valve (218) to adjust the height (120) of the implement (32) relative to the ground surface (19).

## Patentansprüche

1. Verfahren (300) zur automatischen Steuerung einer Höhe (120) eines Arbeitsgeräts (32) eines landwirtschaftlichen Arbeitsfahrzeugs (10) relativ zu einer Bodenoberfläche (19), wobei das Verfahren (300) das Überwachen der Höhe (120) des Arbeitsgeräts (32) relativ zu der Bodenoberfläche (19) und einer Fahrzeuggeschwindigkeit des Arbeitsfahrzeugs (10) mit einer oder mehreren Recheneinrichtungen umfasst, wobei das Verfahren (300) des Weiteren das Bestimmen eines Höhenfehlers des Arbeitsgeräts durch das Vergleichen der Höhe (120) des Arbeitsgeräts (32) mit einer vorbestimmten Zielhöhe mit der einen oder mehreren Recheneinrichtungen umfasst, wobei das Verfahren (300) durch folgende Schritte gekennzeichnet ist:
Berechnen eines Empfindlichkeitsfaktors mit der einen oder mehreren Recheneinrichtungen basierend auf einer Empfindlichkeitseinstellung, und wobei der Empfindlichkeitsfaktor einem ersten konstanten Empfindlichkeitswert entspricht, der proportional zu der Empfindlichkeitseinstellung ist, wenn die überwachte Fahrzeuggeschwindigkeit größer als ein vorbestimmter Geschwindigkeitsgrenzwert ist;
Reduzieren des Empfindlichkeitsfaktors mit der einen oder mehreren Recheneinrichtungen auf weniger als den ersten konstanten Empfindlichkeitswert, wenn die überwachte Fahrzeuggeschwindigkeit geringer als der vorbestimmte Geschwindigkeitsgrenzwert wird; und
Anpassen der Höhe (120) des Arbeitsgeräts (32) relativ zu der Bodenoberfläche (19) mit der einen oder mehreren Recheneinrichtungen basierend auf dem Höhenfehler des Arbeitsgeräts und dem Empfindlichkeitsfaktor.

2. Verfahren (300) nach Anspruch 1, wobei das Reduzieren des Empfindlichkeitsfaktors das Skalieren des Empfindlichkeitsfaktors basierend auf der überwachten Fahrzeuggeschwindigkeit umfasst, so dass sich der Empfindlichkeitsfaktor mit der überwachten Fahrzeuggeschwindigkeit ändert, wenn die überwachte Fahrzeuggeschwindigkeit geringer als der vorbestimmte Geschwindigkeitsgrenzwert ist.

3. Verfahren (300) nach einem der vorhergehenden Ansprüche, wobei das Skalieren des Empfindlichkeitsfaktors basierend auf der überwachten Fahrzeuggeschwindigkeit das lineare Skalieren des Empfindlichkeitsfaktors basierend auf der überwachten Fahrzeuggeschwindigkeit umfasst.

4. Verfahren (300) nach einem der vorhergehenden Ansprüche, wobei das Reduzieren des Empfindlichkeitsfaktors das Anwenden einer diskontinuierlichen Funktion umfasst, sodass der Empfindlichkeitsfaktor einem zweiten konstanten Empfindlichkeitswert entspricht, wenn die überwachte Fahrzeuggeschwindigkeit geringer als der vorbestimmte Grenzwert ist.

5. Verfahren (300) nach einem der vorhergehenden Ansprüche, wobei das Reduzieren des Empfindlichkeitsfaktors das Anwenden einer diskontinuierlichen Funktion umfasst, so dass der Empfindlichkeitsfaktor schrittweise reduziert wird, wenn die überwachte Fahrzeuggeschwindigkeit reduziert wird, wenn die überwachte Fahrzeuggeschwindigkeit unterhalb des vorbestimmten Grenzwerts liegt.

6. Verfahren (300) nach einem der vorhergehenden Ansprüche, das des Weiteren zumindest einen der folgenden Schritte umfasst:
Berechnen eines proportionalen Signals basierend auf einem Produkt aus einem proportionalen Signalanstieg und dem Höhenfehler des Arbeitsgeräts, wobei der proportionale Signalanstieg auf dem Empfindlichkeitsfaktor basiert, und wobei das Anpassen der Höhe (120) des Arbeitsgeräts (32) relativ zur Bodenoberfläche (19) das Anpassen der Höhe (120) des Arbeitsgeräts (32) basierend auf dem proportionalen Signal umfasst; oder
Berechnen eines Integralsignals basierend auf einem Integral des Höhenfehlers des Arbeitsgeräts über die Zeit, und wobei das Anpassen der Höhe (120) des Arbeitsgeräts (32) das Anpassen der Höhe (120) des Arbeitsgeräts (32) des Weiteren basierend auf dem Integralsignal umfasst.

7. Verfahren (300) nach einem der vorhergehenden Ansprüche, das des Weiteren das Empfangen der Empfindlichkeitseinstellung von einer Bedienperson des Arbeitsfahrzeugs (10) umfasst.

8. Verfahren (300) nach einem der vorhergehenden Ansprüche, wobei die Empfindlichkeitseinstellung mit einer Fahrzeuggeschwindigkeitseinstellung verknüpft ist, die für das Ausführen einer landwirtschaftlichen Tätigkeit mit dem Arbeitsgerät (32) in Bezug auf die Bodenoberfläche (19) geeignet ist.

9. Verfahren (300) nach einem der vorhergehenden Ansprüche, wobei das Anpassen der Höhe (120) des Arbeitsgeräts (32) das Steuern eines Ventils (218) umfasst, das in Fluidverbindung mit einem Antrieb (220) steht, der dazu eingerichtet ist, das Arbeitsgerät (32) zu heben und zu senken.

10. Höhensteuersystem (200) für ein Arbeitsgerät (32) für ein landwirtschaftliches Arbeitsfahrzeug (10), wobei das Steuersystem (200) ein Arbeitsgerät (32), das mit dem Arbeitsfahrzeug (10) verbunden ist, und einen Arbeitsgeräthöhensensor (224) umfasst, der dazu eingerichtet ist, eine Höhe (120) des Arbeitsgeräts (32) relativ zu einer Bodenoberfläche (19) zu bestimmen, wobei das Steuersystem (200) des Weiteren eine Steuereinrichtung (202) umfasst, die kommunikativ mit dem Arbeitsgeräthöhensensor (224) verbunden ist, wobei die Steuereinrichtung (202) einen Prozessor (206) und zugehörigen Speicher (208) umfasst, wobei der Speicher (208) Anweisungen speichert, die, wenn sie durch den Prozessor (206) ausgeführt werden, die Arbeitsgerätsteuereinrichtung (202) dazu einrichten, jeweils eine Fahrzeuggeschwindigkeit des Arbeitsfahrzeugs (10) relativ zu der Bodenoberfläche (19) und eine Höhe (1200) des Arbeitsgeräts (32) relativ zu der Bodenoberfläche (19) basierend auf Signalen zu überwachen, die von dem Arbeitsgeräthöhensensor (224) empfangen werden, und einen Höhenfehler des Arbeitsgeräts zu bestimmen, indem die Höhe (120) des Arbeitsgeräts (32) mit einer vorbestimmten Zielhöhe verglichen wird, wobei das Steuersystem (200) **dadurch gekennzeichnet ist, dass**:
die Steuereinrichtung (202) dazu eingerichtet ist:
einen Empfindlichkeitsfaktor basierend auf einer Empfindlichkeitseinstellung zu berechnen, und wobei der Empfindlichkeitsfaktor einem ersten konstanten Empfindlichkeitswert entspricht, der proportional zu der Empfindlichkeitseinstellung ist, wenn die überwachte Fahrzeuggeschwindigkeit größer als ein vorbestimmter Geschwindigkeitsgrenzwert ist;
den Empfindlichkeitsfaktor derart zu reduzieren, dass er geringer als der erste konstante Empfindlichkeitswert ist, wenn die überwachte Fahrzeuggeschwindigkeit geringer als der vorbestimmte Geschwindigkeitsgrenzwert wird; und
die Höhe (120) des Arbeitsgeräts (32) relativ zu der Bodenoberfläche (19) basierend auf dem Höhenfehler des Arbeitsgeräts und dem Empfindlichkeitsfaktor anzupassen.

11. Höhensteuersystem (200) nach Anspruch 10, wobei die Steuereinrichtung (202) des Weiteren dazu eingerichtet ist, den Empfindlichkeitsfaktor basierend auf der überwachten Fahrzeuggeschwindigkeit zu skalieren, so dass sich der Empfindlichkeitsfaktor mit der Fahrzeuggeschwindigkeit ändert, wenn die überwachte Fahrzeuggeschwindigkeit geringer als der vorbestimmte Geschwindigkeitsgrenzwert ist.

12. Höhensteuersystem (200) nach einem der Ansprüche 10 oder 11, wobei die Steuereinrichtung (202) des Weiteren dazu eingerichtet ist, eine diskontinuierliche Funktion anzuwenden, so dass der Empfindlichkeitsfaktor einem zweiten konstanten Empfindlichkeitswert entspricht, wenn die überwachte Fahrzeuggeschwindigkeit geringer als der vorbestimmte Geschwindigkeitsgrenzwert ist.

13. Höhensteuersystem (200) nach einem der Ansprüche 10 bis 12, wobei die Steuereinrichtung (202) des Weiteren dazu eingerichtet ist, eine diskontinuierliche Funktion anzuwenden, so dass der Empfindlichkeitsfaktor schrittweise reduziert wird sowie darauffolgend vorbestimmte Empfindlichkeitswerte verringert werden, wenn die Fahrzeuggeschwindigkeit reduziert wird, wenn die überwachte Fahrzeuggeschwindigkeit unterhalb eines vorbestimmten Geschwindigkeitsgrenzwerts liegt.

14. Höhensteuersystem (200) nach einem der Ansprüche 10 bis 13, das des Weiteren eine Benutzerschnittstelle (222) umfasst, und wobei die Steuereinrichtung (202) des Weiteren dazu eingerichtet ist, die Empfindlichkeitseinstellung von einer Bedienperson des Arbeitsfahrzeugs (10) über die Benutzerschnittstelle (222) zu empfangen.

15. Höhensteuersystem (200) nach einem der Ansprüche 10 bis 14, das des Weiteren einen Antrieb (220), der dazu eingerichtet ist, das Arbeitsgerät (32) relativ zu der Bodenoberfläche (19) zu heben und senken und ein Steuerventil (218) umfasst, das in Fluidverbindung mit dem Antrieb (220) steht, und wobei die Steuereinrichtung (202) dazu eingerichtet ist, die Strömung eines Fluids zu dem Antrieb (220) zu steuern, wobei das Steuerventils (218) verwendet wird, um die Höhe (120) des Arbeitsgeräts (32) relativ zu der Bodenoberfläche (19) anzupassen.

## Revendications

1. Méthode (300) de réglage automatique de la hauteur (120) d'un outil (32) d'un véhicule de travail agricole (10) par rapport à une surface du sol (19), la méthode (300) comprenant le réglage par l'intermédiaire d'un ou de plusieurs dispositifs informatiques, de chacune des hauteurs (120) de l'outil (32) par rapport à la surface du sol (19) et une vitesse de véhicule du véhicule de travail (10) par rapport à la surface du sol (19), la méthode (300) comprenant en outre la détermination par l'intermédiaire d'un ou de plusieurs dispositifs informatiques, d'une erreur de hauteur de l'outil en comparant la hauteur (120) de l'outil (32) à une hauteur cible prédéterminée, la méthode (300) étant **caractérisée par** :
le calcul, par l'intermédiaire d'un ou de plusieurs dispositifs informatiques, d'un facteur de sensibilité sur la base d'un paramètre de sensibilité et dans lequel, lorsque la vitesse de véhicule est supérieure à un seuil de vitesse prédéterminé, le facteur de sensibilité équivaut à une première valeur de sensibilité constante qui est proportionnelle au paramètre de sensibilité ;
la réduction, par l'intermédiaire d'un ou de plusieurs dispositifs informatiques, du facteur de sensibilité à moins de la première valeur de vitesse constante lorsque la vitesse de véhicule contrôlée est inférieure au seuil de vitesse prédéterminé ; et
le réglage, par l'intermédiaire d'un ou de plusieurs dispositifs informatiques, de la hauteur (120) de l'outil (32) par rapport à la surface du sol (19) sur la base de l'erreur de hauteur de l'outil et du facteur de sensibilité.

2. Méthode (300) selon la revendication 1, dans laquelle la réduction du facteur de sensibilité comprend la mise à l'échelle du facteur de sensibilité sur la base de la vitesse de véhicule contrôlée de manière à ce que le facteur de sensibilité varie en fonction de la vitesse de véhicule contrôlée lorsque la vitesse de véhicule contrôlée est inférieure au seuil de vitesse prédéterminé.

3. Méthode (300) selon l'une quelconque des revendications précédentes, dans laquelle la mise à l'échelle du facteur de sensibilité sur la base de la vitesse de véhicule contrôlée comprend la mise à l'échelle linéaire du facteur de sensibilité sur la base de la vitesse de véhicule contrôlée.

4. Méthode (300) selon l'une quelconque des revendications précédentes, dans laquelle la réduction du facteur de sensibilité comprend l'application d'une fonction discontinue de manière à ce que le facteur de sensibilité équivaille à une deuxième valeur de sensibilité constante lorsque la vitesse de véhicule contrôlée est inférieure au seuil de vitesse prédéterminé.

5. Méthode (300) selon l'une quelconque des revendications précédentes, dans laquelle la réduction du facteur de sensibilité comprend l'application d'une fonction discontinue de manière à ce que le facteur de sensibilité soit réduit progressivement lorsque la vitesse de véhicule contrôlée est réduite quand la vitesse de véhicule contrôlée est inférieure au seuil de vitesse prédéterminé.

6. Méthode (300) selon l'une quelconque des revendications précédentes, comprenant en outre une des étapes suivantes :
calculer un signal proportionnel sur la base d'un produit d'un gain de signal proportionnel et de l'erreur de hauteur de l'outil, le gain de signal proportionnel étant basé sur le facteur de sensibilité, et dans lequel le réglage de la hauteur (120) de l'outil (32) par rapport à la surface du sol (19) comprend le réglage de la hauteur (120) de l'outil (32) sur la base du signal proportionnel ; ou
calculer un signal intégral sur la base d'une intégrale de l'erreur de hauteur de l'outil en fonction du temps, et dans lequel le réglage de la hauteur (120) de l'outil (32) comprend le réglage de la hauteur (120) de l'outil (32) basé en outre sur le signal intégral.

7. Méthode (300) selon l'une quelconque des revendications précédentes, comprenant en outre la réception d'un paramètre de sensibilité d'un opérateur du véhicule de travail (10).

8. Méthode (300) selon l'une quelconque des revendications précédentes, dans laquelle le paramètre de sensibilité est associé à un paramètre de vitesse de véhicule adapté à l'exécution d'une opération agricole avec l'outil (32) par rapport à la surface du sol (19).

9. Méthode (300) selon l'une quelconque des revendications précédentes, dans laquelle le réglage de la hauteur (120) de l'outil (32) comprend le réglage d'une vanne (218) couplée de manière fluidique à un actionneur (220) configuré pour lever et abaisser l'outil (32).

10. Système de réglage de la hauteur (200) pour outil (32) de véhicule de travail agricole (10), le système de réglage (200) comprenant un outil (32) relié au véhicule de travail agricole (10), et un capteur de hauteur de l'outil (224) configuré pour détecter une hauteur (120) de l'outil (32) par rapport à une surface du sol (19), le système de réglage (200) comprenant en outre un contrôleur (202) relié en communication au capteur de hauteur de l'outil (224), le contrôleur (202) comprenant un processeur (206) et une mémoire associée (208), la mémoire (208) stockant des instructions qui, une fois exécutées par le processeur (206), configurent le contrôleur (202) de l'outil pour contrôler chacune des vitesses de véhicule du véhicule de travail (10) par rapport à la surface du sol (19) et une hauteur (120) de l'outil (32) par rapport à la surface du sol (19) sur la base des signaux reçus par le capteur de hauteur de l'outil (224) et déterminer une erreur de hauteur de l'outil en comparant la hauteur (120) de l'outil (32) à une hauteur cible prédéterminée, le système de réglage (200) étant **caractérisé par** :
le contrôleur (202) étant configuré pour :
calculer un facteur de sensibilité sur la base d'un paramètre de sensibilité, et dans lequel, lorsque la vitesse de véhicule contrôlée est supérieure à un seuil de vitesse prédéterminé, le facteur de sensibilité équivaut à la première valeur de sensibilité constante proportionnelle au paramètre de sensibilité ;
réduire le facteur de sensibilité à moins de la première valeur de sensibilité constante lorsque la vitesse de véhicule contrôlée est inférieure au seuil de vitesse prédéterminé ; et
régler la hauteur (120) de l'outil (32) par rapport à la surface du sol (19) sur la base de l'erreur de hauteur de l'outil et du facteur de sensibilité.

11. Système de réglage de la hauteur (200) selon la revendication 10, dans lequel le contrôleur (202) est en outre configuré pour mettre à l'échelle le facteur de sensibilité sur la base de la vitesse de véhicule contrôlée de manière à ce que le facteur de sensibilité varie en fonction de la vitesse de véhicule contrôlée lorsque la vitesse de véhicule contrôlée est inférieure au seuil de vitesse prédéterminé.

12. Système de réglage de la hauteur (200) selon l'une quelconque des revendications 10 ou 11, dans lequel le contrôleur (202) est en outre configuré pour appliquer une fonction discontinue de manière à ce que le facteur de sensibilité équivaille à une deuxième valeur de sensibilité constante lorsque la vitesse de véhicule contrôlée est inférieure au seuil de vitesse prédéterminé.

13. Système de réglage de la hauteur (200) selon l'une quelconque des revendications 10 à 12, dans lequel le contrôleur (202) est en outre configuré pour appliquer une fonction discontinue de manière à ce que le facteur de sensibilité soit réduit progressivement avec une réduction subséquente des valeurs de sensibilité prédéterminées lorsque la vitesse de véhicule contrôlée est réduite quand la vitesse de véhicule contrôlée est inférieure au seuil de vitesse prédéterminé.

14. Système de réglage de la hauteur (200) selon l'une quelconque des revendications 10 à 13, comprenant en outre une interface opérateur (222), et dans lequel le contrôleur (202) est en outre configuré pour recevoir le paramètre de sensibilité d'un opérateur du véhicule de travail (10) via l'interface opérateur (222).

15. Système de réglage de la hauteur (200) selon l'une quelconque des revendications 10 à 14, comprenant en outre un actionneur (220) configuré pour lever et abaisser l'outil (32) par rapport à la surface du sol (19) et une vanne de régulation (218) couplée de manière fluidique à l'actionneur (220), et dans lequel le contrôleur (202) est configuré pour contrôler le flux d'un fluide vers l'actionneur (220) par le biais de la vanne de régulation (218) pour régler la hauteur (120) de l'outil (32) par rapport à la surface du sol (19).
